# EUROPÄISCHE PATENTSCHRIFT

(11) **EP 1 717 012 B1**
(45) Veröffentlichungstag und Bekanntmachung des Hinweises auf die Patenterteilung: **08.06.2016**
(21) Anmeldenummer: 06112146.3
(22) Anmeldetag: 03.04.2006
(51) Int. Cl.: B29C 47/90, B29C 47/32

(54) **Vorrichtung für die Profilextrusion**
Apparatus for profile extrusion
Dispositif d'extrusion de profiles

(30) Priorität: 30.04.2005 DE 102005020296
(43) Veröffentlichungstag der Anmeldung: 02.11.2006
(73) Patentinhaber: battenfeld-cincinnati Germany GmbH, 32547 Bad Oeynhausen (DE)
(72) Erfinder: Dohmann, Heinrich, 37671, Höxter (DE); Becker, Frank, 32547, Bad Oeynhausen (DE)

(56) Entgegenhaltungen:
- EP-A- 0 769 334
- EP-A- 1 249 331
- DE-A- 19 804 235
- DE-A1- 1 909 367
- DE-A1- 10 206 276
- FR-A- 2 130 986
- GB-A- 2 174 419
- US-A- 3 382 747

## Beschreibung

Die Erfindung betrifft eine Vorrichtung für die Profilextrusion, die aus mindestens zwei Teilen besteht, die direkt am zu extrudierenden Profil anlegbar sind.

Das Dokument EP 0 769 334 A1 beschreibt eine Vorrichtung gemäß dem Oberbegriff des Anspruchs 1.

Insbesondere in der Rohrextrusion gibt es unterschiedliche Anforderungen an Teilbereiche während des Extrudierens. So muss beispielsweise der Schmelzestrang nach dem Verlassen des Extruders kalibriert werden, in einen Abkühlbereich geführt werden oder im Vakuumtank nach außen hin abgedichtet werden. In manchen Anwendungsfällen muss das Rohr zum Ablängen eingeklemmt werden. Für all diese Funktionen werden derzeit unterschiedliche Werkzeuge, Abdichtbereiche und Klemmvorrichtungen vorgesehen.

Die vorliegende Erfindung stellt sich die Aufgabe, eine Vorrichtung anzubieten, die für die Funktionen Dichten, Kalibrieren, Führen und Klemmen gleichermaßen eingesetzt werden kann.

Die Lösung der Aufgabe ist in Anspruch 1 offenbart. Der Oberbegriff das Anspruchs 1 führt aus, dass jedes der zwei Teile mindestens eine Anlagefläche aufweist, die am zu extrudierenden Profil anlegbar ist und die mindestens zwei Teile so angeordnet sind, dass die Anlagefläche der Teile das zu extrudierende Profil umschließen. Vorteilhafte Weiterbildungen sind in den Unteransprüchen wiedergegeben.

Die zwei Teile bilden somit in ihrer Anordnung im Querschnitt eine kreisrunde Öffnung, durch die das zu extrudierende Profil durchgeführt werden kann. Vorteilhafterweise sind die Teile so ausgeführt, dass sie durch einfache Mittel derart verdreht oder verstellt werden können, dass ihre Anlagenfläche einen Auslaß für unterschiedliche Profilquerschnitte bilden. Hier bei ist besonders hervorzuheben, dass diese vorgeschlagene Lösung es ermöglicht, die Vorrichtung während der Produktion, also online, auf einen neuen Querschnitt einzustellen. Dies kann über eine geeignete Maschinensteuerung erfolgen, in dem eine zentrale Verstellung mit dieser in einer Regelverbindung steht.

Besonders vorteilhaft ist es, wenn die Teile mindestens zwei Berührungsflächen aufweisen und so angeordnet sind, dass jede Berührungsfläche eine Berührungsfläche eines anderen Teils kontaktiert. Eine derartige Vorrichtung eignet sich besonders als Führung für das zu kalibrierende Profil in einer Kalibrierstation oder als Ein- und Auslaßöffnung eines Vakuumtankes, da die Berührungsflächen als Dichtflächen ausgeführt werden können.

Durch die Ausführung mit einem veränderlichen Querschnitt eignet sich die vorgeschlagene Vorrichtung auch als Klemmvorrichtung für ein Profil, da ein größeres Profil durch Verdrehen auf den kleineren Querschnitt durch diese geklemmt wird. Dies kann z.B. für den Einsatz vor einer Ablängvorrichtung wie einer Säge geeignet sein.

Die vorgeschlagene Vorrichtung kann somit besonders zum Kalibrieren eines Rohres verwendet werden und kann in der Rohrextrusion zum Führen, Klemmen oder Abdichten eines Rohres verwendet werden. Jedes weitere Profil ist denkbar, wenn die Geometrie einen veränderlichen Querschnitt aufweist, der beispielsweise von rund auf eckig geht. Aber auch andere Profile wie Rohre sind hier denkbar.

Die vorgeschlagene Vorrichtung erfüllt somit alle eingangs erwähnten Funktionen, wie sie insbesondere in der Rohrextrusion zum Einsatz gelangen.

In der Zeichnung ist ein Ausführungsbeispiel der Erfindung wiedergegeben.
- Fig. 1: zeigt eine perspektivische Darstellung der Vorrichtung und
- Fig. 2: einen Schnitt durch eines der Teile

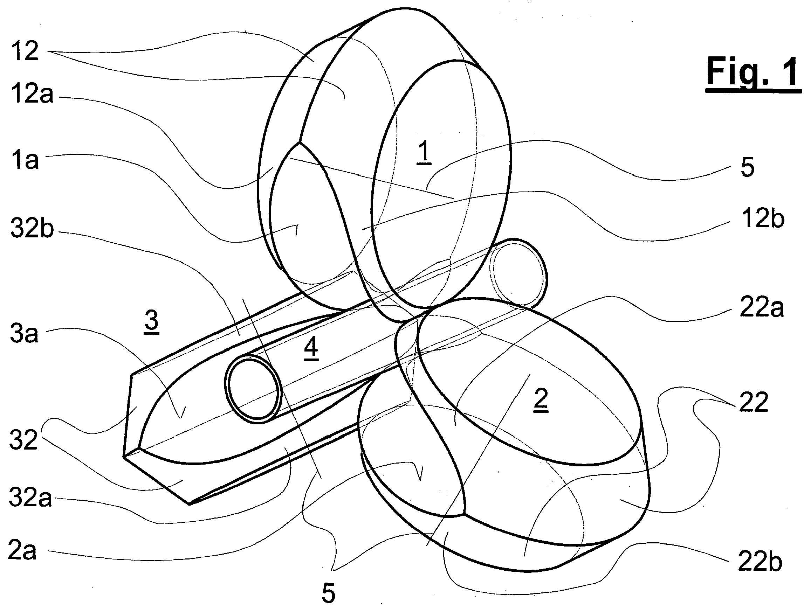

Die Figur 1 zeigt eine besondere Ausführungsform der Erfindung am Beispiel für ein Rohr. Versuche haben gezeigt, dass der Einsatz von drei rollenartigen Teilen am besten geeignet ist, da hierüber mehrere Querschnitte abgedeckt werden können. Jede der drei Rollen ist identisch ausgeführt und mit gleichem Winkelversatz um das Rohr angeordnet. Jede der Rollen ist hier um ihre Mittelachse 5 verdrehbar, wobei alle drei Rollen 1, 2 und 3 für eine nicht dargestellte zentrale Verstellvorrichtung gleichzeitig um einen gleichen Winkelbetrag um die Drehachse (hier Mittelachse 5) verdrehbar sind. Die Drehung ist auch um jede andere Drehachse der Teile 1, 2 und 3 denkbar. Es ist nicht zwingend erforderlich, alle Teile 1, 2 oder 3 direkt über die zentrale Verstellung zu verstellen. Denkbar ist hier auch die zentrale Verstellung einer der Teile, wobei die Verstellung der anderen Teile mittels Reibschluß aufgrund der Berührung der jeweiligen Teilflächen 12a, 12b, 22a, 22b, 32a, 32b erfolgt.

Jede der drei Rollen 1, 2 und 3 weist je eine Anlagefläche 1a, 2a und 3a auf. Jede dieser Anlageflächen weist in einer Schnittdarstellung einen Radius auf, der sich in Umfangsrichtung des Teiles verändert und bis zu Null auslaufen kann.

Weiterhin hat jedes der Teile 1, 2 und 3 Berührungsflächen 12, 22 und 32. Jede der Berührungsflächen besteht aus zwei Teilflächen 12a und 12b, 22a und 22b, 32a und 32b. Jede Teilfläche ist zur weiteren Teilfläche jedes Teiles symmetrisch. Somit ist 12a zu 32b, 22a zu 12b und 32a zu 22b Teilberührungsfläche. Wie in der Figur 1 dargestellt sind die Teile 1, 2 und 3 so um das Rohr angeordnet, dass die Anlageflächen 1a, 2a und 3a einen Kreisquerschnitt für das zu extrudierende Rohr bilden, an denen diese Flächen anliegen. Jede der Berührungsflächen steht mit einer Berührungsfläche eines anderen Teiles in Kontakt, wodurch eine Abdichtung möglich ist. So liegt beispielsweise die Fläche 12a an 32b, die Fläche 32a an 22b und die Fläche 22a an 12b an.

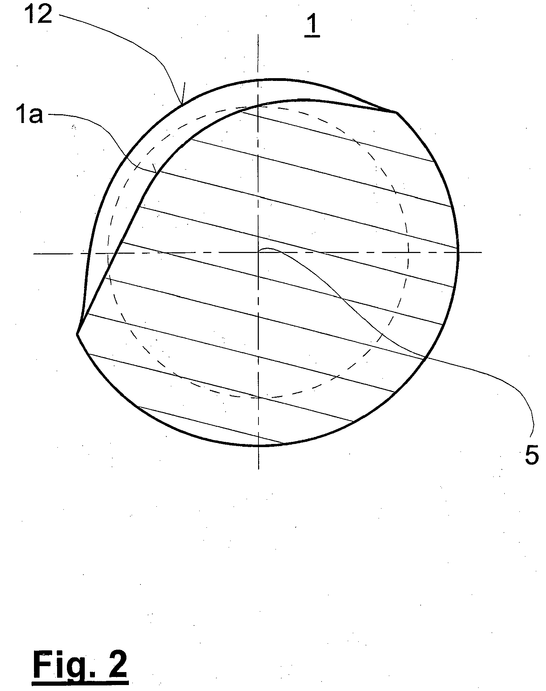

Figur 2 zeigt einen Schnitt durch das Teil 1, womit verdeutlicht wird, dass die Anlagefläche 1a eine Kurve um die Mittelachse 5 ist, die einen anderen Abstand zum Mittelpunkt hat und somit einen veränderten Radius aufweist.

Bei kleinen Rohrquerschnitten ist es auch möglich, nur zwei der Teile einzusetzen oder bei größeren Querschnitten auch mehr als drei. Durch diese individuelle Verstellmöglichkeit des Rohrquerschnittes wird auch das Anfahren einer Extrusionslinie begünstigt, da ein sehr dünner Querschnitt, ja beispielsweise sogar nur ein Seil zum Einsatz gelangen kann.

### Bezu gszeichenliste:

- 1: erstes Teil
- 2: zweites Teil
- 3: drittes Teil
- 4: Rohr
- 5: Mittelachse von 1, 2 oder 3

- 1a: Anlagefläche von 1
- 2a: Anlagefläche von 2
- 3a: Anlagefläche von 3

- 12: Berührungsflächen von 1
- 22: Berührungsflächen von 2
- 32: Berührungsflächen von 3

- 12a: erste Teilfläche von 12
- 12b: zweite Teilfläche von 12
- 22a: erste Teilfläche von 22
- 12b: zweite Teilfläche von 22
- 32a: erste Teilfläche von 32
- 32b: zweite Teilfläche von 32

## Patentansprüche

1. Vorrichtung für die Profilextrusion, die aus mindestens zwei Teilen (1, 2, 3) besteht, die direkt am zu extrudierenden Profil (4) anlegbar sind,
jedes der zwei Teile (1, 2, 3) mindestens eine Anlagefläche (1a, 2a, 3a) aufweist, die am zu extrudierenden Profil (4) anlegbar ist und
die mindestens zwei Teile (1, 2, 3) so angeordnet sind, dass die Anlageflächen (1a, 2a, 3a) der Teile (1, 2, 3) das zu extrudierende Profil (4) umschließen,
**jedes der zwei Teile (1, 2,3) eine Drehachse (5) aufweist, um die die Teile (1, 2,3) verdrehbar sind,** wobei
**die mindestens zwei Teile (1, 2, 3) als Rollen ausgebildet sind, deren Anlageflächen (1a, 2a, 3a) einen Radius aufweisen, der sich in Umfangsrichtung des Teiles verändert,**
**dadurch gekennzeichnet, dass die Rollen (1, 2, 3) in oder an einem Vakuumtank oder zum Klemmen vor einer Ablängvorrichtung angeordnet sind.**

2. Vorrichtung nach Anspruch 1, **dadurch gekennzeichnet, dass** jedes der Teile (1, 2, 3) mindestens zwei Berührungsflächen (12, 22, 32) aufweist, wobei jede Berührungsfläche (12a/12b, 22a/22b, 32a/32b) mit einer Berührungsfläche (12a/12b, 22a/22b, 32a/32b) eines anderen Teils (1, 2, 3) in Kontakt steht.

3. Vorrichtung nach Anspruch 2, **dadurch gekennzeichnet, dass** die mindestens zwei Teile (1, 2, 3) so angeordnet sind, dass die Berührungsflächen (12, 22, 32) Dichtflächen sind.

## Claims

1. Apparatus for profile extrusion, comprising at least two components (1, 2, 3) that can be placed against the profile to be extruded (4),
each of the at least two components (1, 2, 3) featuring a contact surface (1a, 2a, 3a) that can be placed against the profile to be extruded (4),
the at least two components (1, 2, 3) being arranged in such a way that the contact surfaces (1a, 2a, 3a) of the components (1, 2, 3) encircle the profile to be extruded (4),
**each of the at least two components (1, 2, 3) having an axis of rotation around which the components (1, 2, 3) can be twisted,**
**the at least two components (1, 2, 3) being designed as rollers whose contact surfaces (1a, 2a, 3a) having a radius that changes in the peripheral direction of the component,**
**characterized in that**
**the rollers (1, 2, 3) are arranged in or against a vacuum tank or before a cutting device for clamping.**

2. Apparatus according to claim 1, **characterized in that** each of the components (1, 2, 3) features at least two contact surfaces (12, 22, 32), each of the contact surfaces (12a/12b, 22a/22b, 32a/32b) touching a contact surface (12a/12b, 22a/22b, 32a/32b) of another component (1, 2, 3).

3. Apparatus according to claim 2, **characterized in that** the at least two components (1, 2, 3) are arranged in such a way that the contact surfaces (12, 22, 32) are sealing surfaces.

## Revendications

1. Dispositif d'extrusion de profiles, comprenant au moins deux composants (1, 2, 3) qui peuvent être appliqués au profile à extruder (4),
chacun des composants (1, 2, 3) présentant une surface d'appui (1a, 2a, 3a) qui peuvent être appliqués au profile à extruder (4),
les au moins deux composants (1, 2, 3) étant arrangés de telle manière que les surfaces d'appui (1a, 2a, 3a) des composants (1, 2, 3) entourent le profile à extruder (4),
**chacun des deux composants (1, 2, 3) ayant une axe de rotation (5) autour de laquelle les composants (1, 2, 3) peuvent être tournés,**
**les au moins deux composants (1, 2, 3) étant des rouleaux dont les surfaces d'appui (1a, 2a, 3a) ont un rayon, qui change dans la direction circonférentielle du composant,**
**le dispositif caractérisé en ce que**
**les rouleaux (1, 2, 3) sont arrangés dans ou sur un réservoir de vide ou avant un dispositif de découpage pour pincer.**

2. Dispositif selon revendication 1, **caractérisé en ce que** chacun des composants (1, 2, 3) présente au moins deux surfaces d'appui (12, 22, 32), chacun des surfaces d'appui (12a/12b, 22a/22b, 32a/32b) est appliquée à une surface d'appui (12a/12b, 22a/22b, 32a/32b) d'un autre composant.

3. Dispositif selon revendication 2, **caractérisé en ce que** les au moins deux composants (1, 2, 3) sont arrangés de telle manière que les surfaces d'appui (12, 22, 32) soient des surfaces d'étanchéité.
